(19) Europäisches Patentamt
European Patent Office
Office européen des brevets

(11) **EP 2 779 293 A1**

(12) **EUROPEAN PATENT APPLICATION**
published in accordance with Art. 153(4) EPC

(43) Date of publication:
**17.09.2014 Bulletin 2014/38**

(51) Int Cl.:
*H01M 8/04* (2006.01)     *H01M 8/06* (2006.01)
*H01M 8/12* (2006.01)     *H01M 8/24* (2006.01)

(21) Application number: **12848108.2**

(22) Date of filing: **06.11.2012**

(86) International application number:
**PCT/JP2012/078724**

(87) International publication number:
**WO 2013/069633 (16.05.2013 Gazette 2013/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.11.2011 JP 2011245891**

(71) Applicant: **JX Nippon Oil & Energy Corporation
Chiyoda-ku
Tokyo 100-8162 (JP)**

(72) Inventors:
• **SATO, Yasushi**
  **Tokyo 100-8162 (JP)**
• **IBUKA, Takeshi**
  **Tokyo 100-8162 (JP)**

(74) Representative: **Grünecker, Kinkeldey,
Stockmair & Schwanhäusser
Leopoldstrasse 4
80802 München (DE)**

(54) **SOLID-OXIDE FUEL-CELL SYSTEM AND STARTUP-CONTROL METHOD FOR SAME**

(57)     An object of the invention is to improve durability of a SOFC system and secure favorable power generation performance during the actual useful service period of the system. In the SOFC system, a fuel gas flow rate to a fuel cell stack is set at F1 at the time of start-up. At a time point when a temperature T of the fuel cell stack reaches a first temperature T1 or higher after the temperature is started to increase, when it is determined that the stack temperature T at the time of the previous system stop is lower than or equal to a predetermined value Tb, the fuel gas flow rate is decreased to F2a (which is less than F1), and when it is determined that the stack temperature T is higher than the predetermined value Tb, the fuel gas flow rate is decreased to F2b (which is less than F2a) to slow the temperature increase rate. Furthermore, when the stack temperature T reaches T2, the fuel gas flow rate is returned to F1 so as to increase the fuel gas flow rate and then the process proceeds to the next process.

*FIG. 8*

EP 2 779 293 A1

**Description**

TECHNICAL FIELD

The present invention relates to a solid-oxide fuel-cell system (hereinafter referred to as an "SOFC system") and a start-up control method for the same.

BACKGROUND ART

Attention has been focused on SOFC systems as a next-generation stationary power source with low $CO_2$ emissions, from the viewpoint of high power generation efficiency of SOFC systems. In recent years, technologies have been actively developed, and thus, a problem in durability caused by an operation at a high temperature of 600 to 1,000°C has been overcome. In addition, the operation temperature has steadily been reduced.

As such a SOFC system, a system disclosed in Patent Document 1 is known.

The system is configured to include a reformer that generates a hydrogen-enriched fuel gas (reformed gas) by a reforming reaction; a fuel cell stack (assembly of fuel cells) which allows reacting the fuel gas from the reformer with air to generate power; and a module case which surrounds the reformer and the fuel cell stack, in the inside of the module case, and excessive fuel gas is combusted to maintain the reformer and the fuel cell stack in a high temperature state. Incidentally, these components are substantial parts of the system and are collectively referred to as a hot module.

In addition, each cell constituting the fuel cell stack is an anode supported solid oxide fuel cell, and includes a cell support which is made of a porous substance having a composition containing at least nickel (Ni) metal and is provided therein with a gas passage through which the fuel gas from the reformer passes from one end to the other end. The cell is configured by laminating a fuel electrode layer, a solid oxide electrolyte layer, and an air electrode layer on the cell support. Moreover, the reformer and the fuel cell stack are heated by combusting excessive fuel gas at the other end of the gas passage.

CITATION LIST

PATENT DOCUMENT

Patent Document 1: Japanese Patent No. 4565980

SUMMARY OF THE INVENTION

PROBLEMS TO BE SOLVED BY THE INVENTION

In stationary fuel-cell systems including a SOFC system, the system needs to be stopped at some frequency for various reasons, such as a user's choice, a purpose of exhibiting energy saving effect at a maximum, and a problem in a device or a utility.

Therefore, in order to put the SOFC system to practical use as a stationary power generation device, the SOFC system needs to have durability for about 10 years with the assumption that start-and-stop operation will be repeated.

The present inventors found that, in the fuel cell stack of the SOFC system, if the supply of reformed gas to the fuel cell stack is stopped after the power generation stops, air from the outside flows and is diffused into the fuel electrode of the fuel cell, and thus the cell support having a composition containing nickel metal is oxidized by the air in a high temperature state, and thus, it is likely that the fuel cell or the fuel cell stack will be damaged.

Moreover, they found that the degree of damage to the cell is dependent on the degree of oxidation of the cell support after the power generation stops, and the cell damage markedly occurs with increasing frequency at a certain degree of oxidation or more.

That is to say, the oxidation degree of the cell support is a degree at which nickel metal in the cell support is oxidized due to air diffusion to the fuel electrode layer after the power generation stops, and the oxidation degree can be defined by using a Ni oxidation degree defined by the following formula.

Ni oxidation degree = (Number of moles of Ni atoms which are present as NiO among Ni atoms contained in the cell support) / (Number of moles of all Ni atoms in the cell support) $\times$ 100 (%)

Furthermore, the present inventors found that it is necessary to suppress oxidation of nickel metal after the stop of the system in order to improve durability of the system.

However, it is difficult to make the oxidation amount of nickel metal after the stop of the system 0 (zero). Moreover, in a case in which the system is rapidly shut down in a high temperature state (the current sweep stop and the supply stop of fuel and water are performed at the same time because a serious problem occurs), and the oxidation amount of nickel metal is increased.

In view of the abovementioned problem, they found out that the system durability can also be improved by improving a control method used when nickel metal oxidized after the stop of the system is reduced at the time of system start-up.

From the above viewpoint, an object of the invention is to secure favorable power generation performance over a long period of time and improve the system durability by controlling at the time of system start-up.

MEANS FOR SOLVING THE PROBLEMS

Therefore, a solid-oxide fuel-cell system is configured to include: a reformer which generates a hydrogen-enriched fuel gas by a reforming reaction; a fuel cell stack which is provided with a passage of the fuel gas, including a cell support made of a porous substance having a composition containing nickel metal, and allows to react the fuel gas with air to generate power; and a module case which surrounds the reformer and the fuel cell stack, in the inside of which the fuel gas heated in the reformer is supplied to the fuel cell stack and excessive fuel gas of the fuel cell stack is combusted to increase temperatures of the reformer and the fuel cell stack such that the reformer and the fuel cell stack are maintained in a high temperature state. The solid-oxide fuel-cell system is configured as follows.

In the solid-oxide fuel-cell system, a temperature of the fuel cell stack is measured (stack temperature measurement unit).

A fuel gas supply amount supplied from the reformer to the fuel cell stack is controlled (fuel gas supply amount control unit).

A time at which nickel metal oxidized in the cell support during increasing a temperature of the fuel cell stack at the time of the system start-up passes through a predetermined temperature zone in which the nickel metal is reduced by the fuel gas is controlled to be equal to or longer than a time set based on an oxidation degree of nickel metal before the system start-up (start-up control unit).

EFFECT OF THE INVENTION

According to the invention, once nickel metal in the cell support which has been oxidized after the stop of the system is in a predetermined temperature zone in which the nickel metal is reduced by the fuel gas from the reformer at the time of the system start-up, it takes a predetermined time or longer to pass through the temperature zone.

According to this, by performing reduction while suppressing a reduction rate to be low, a temperature difference between respective units of the cell support or respective units of the fuel cell stack including an electrode connected to the cell support and the like is suppressed to be low and stress can be decreased, and thus, durability of the fuel cell stack can be improved, so that durability of the system can be improved, and required durability (actual service life) is satisfied. Therefore, favorable power generation performance can be secured during the actual useful period of the system.

Moreover, since a time necessary and sufficient for satisfying the required durability (actual service life) is set based on the Ni oxidation degree after the stop of the system , durability is ensured and the start-up control is completed as quickly as possible to start the power generation, even in a case in which Ni oxidation degrees after the stop are different from one another according to conditions of the system stop or the like.

BRIEF DESCRIPTION OF THE DRAWINGS

Fig. 1 is a longitudinal cross-sectional view schematically illustrating a hot module of a SOFC system according to an embodiment of the invention.
Fig. 2 is a transverse cross-sectional view of a fuel cell stack of the system in planar view.
Fig. 3 is a view illustrating a correlation between a Ni oxidation degree and a cell voltage drop rate.
Fig. 4 is a view illustrating a correlation between a Ni oxidation degree and a voltage drop rate after performing a start-and-stop operation 240 times.
Fig. 5 is a view illustrating a relationship between a maximum stack temperature at the time of stopping a reformed gas and a Ni oxidation degree.
Fig. 6 is a flowchart of stop control.
Fig. 7 is a view illustrating a reduction rate of oxidized Ni by a temperature programmed reduction (TPR) and a result of a $H_2$ detection value.
Fig. 8 is a flowchart of start-up control of a first embodiment according to the invention.
Fig. 9 is a time chart illustrating a state change at the time of the start-up control of the first embodiment.

Fig. 10 is a view illustrating a voltage drop rate with respect to a setting time period TM1 for passing through a temperature zone in a case in which it is assumed that normal stop is performed 240 times and emergency shutdown is performed 20 times.

Fig. 11 is a flowchart of start-up control of second and third embodiments according to the invention.

Fig. 12 is a time chart illustrating a state change at the time of the start-up control of the second embodiment.

Fig. 13 is a time chart illustrating a state change at the time of the start-up control of the third embodiment.

Fig. 14 is a flowchart of start-up control of fourth and fifth embodiments according to the invention.

Fig. 15 is a time chart illustrating a state change at the time of the start-up control of the fourth embodiment.

Fig. 16 is a time chart illustrating a state change at the time of the start-up control of the fifth embodiment.

MODE FOR CARRYING OUT OF THE INVENTION

Hereinbelow, embodiments of the invention will be described in detail.

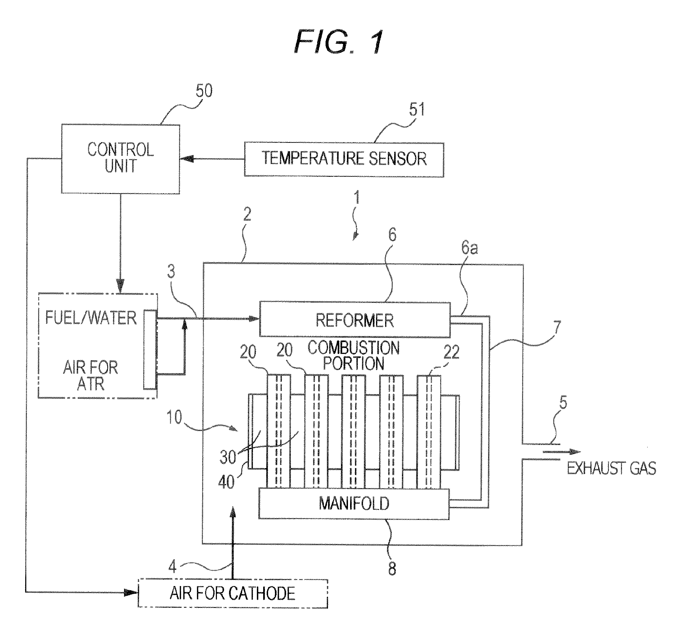

Fig. 1 is a longitudinal cross-sectional view schematically illustrating a hot module that is a substantial part of a SOFC system according to an embodiment of the invention.

A hot module 1 is configured to accommodate a reformer 6 and a fuel cell stack 10 in a module case 2.

The module case 2 is configured such that the inner surface of a rectangular-parallelepiped outer frame made of a heat-resistant metal is sealed with a heat insulation material. In addition, a supply tube 3 of fuel, water, and air for autothermal reforming reaction (ATR) and a supply tube 4 of air for cathode are provided from the outside into the case. Moreover, an exhaust port 5 is further included. As a fuel (raw fuel), city gas, LPG, methanol, dimethyl ether (DME), kerosene, and the like are used.

The reformer 6 is disposed at the upper portion in the module case 2 (upper side of the fuel cell stack 10) and the supply tube 3 of fuel, water, and air for ATR from the outside is connected thereto.

The case of the reformer 6 is formed by a heat-resistant metal. A catalyst chamber that accommodates a reforming catalyst used for reforming a raw fuel such as city gas, LPG, methanol, DME, and kerosene to be a hydrogen-enriched fuel gas (reformed gas), and a water vaporizing chamber that vaporizes water for a steam reforming reaction using a reforming catalyst are formed in the case.

One end of a reformed gas supply tube 7 is connected to a reformed gas outlet 6a of the reformer 6, and the other end of the reformed gas supply tube 7 is connected to a hollow manifold 8 for distributing a reformed gas that is disposed at the lower side of the fuel cell stack 10.

The fuel cell stack 10 is disposed at the lower portion in the module case 2 (lower side of the reformer 6) and is held on the manifold 8.

The fuel cell stack 10 is an assembly of plural fuel cells 20. The plural longitudinal cells 20 (for simplicity, five cells are illustrated in Fig. 1) are arranged in a row in the transverse direction such that collector members 30 are interposed between the side surfaces of the cells 20. In the same manner, the plural cells 20 are arranged in a matrix form by arranging the plural cells in plural rows behind the row of Fig. 1.

A gas passage 22 is formed at the inside of each fuel cell 20 from the lower end to the upper end. The lower end of each gas passage 22 is communicated with the manifold 8, and a combustion portion used for an excessive fuel gas is formed at the upper end thereof.

The supply amount of fuel, water, and ATR air to the reformer 6 and the supply amount of air for cathode into the module case 2 are controlled by a control unit 50. For such a control, a temperature sensor 51 that measures a temperature of the fuel cell stack 10 is provided in the module case 2 and a temperature measurement signal or the like of the temperature sensor 51 is input to the control unit 50.

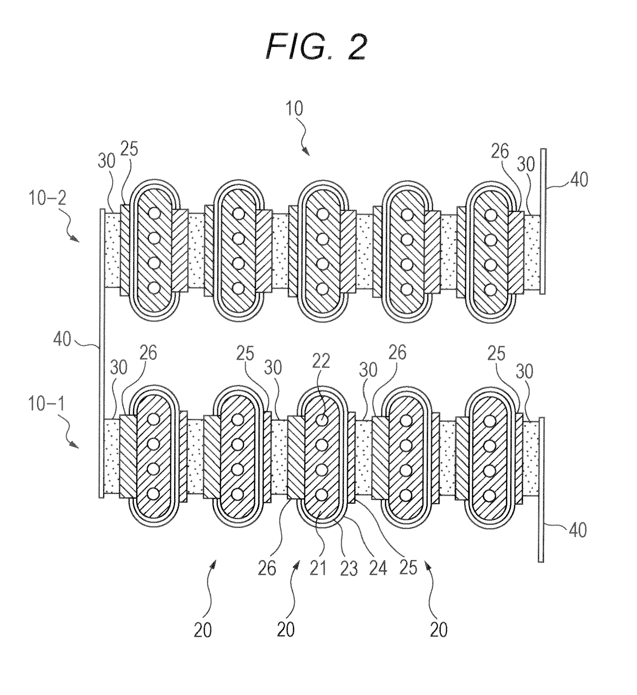

Next, each fuel cell 20 constituting the fuel cell stack 10 will be described with reference to Fig. 2.

Fig. 2 is a transverse cross-sectional view of the fuel cell stack in plane view.

The fuel cells 20 are an anode supported solid oxide fuel cell and includes a cell support 21 (provided with the gas passage 22), a fuel electrode layer 23, a solid oxide electrolyte layer 24, an air electrode layer 25, and an interconnector 26.

The cell support 21 is made of a porous substance having a composition including at least nickel metal. The cell support 21 is a plate-shaped piece having a flat oval transverse cross section and extending in the longitudinal direction (vertical direction), and has planar both side surfaces (planar surfaces) and semi-cylindrical front and rear surfaces. One end (lower end) of the cell support 21 is inserted to an opening of the upper surface of the manifold 8 to be fitted gas-tight thereto. The other end (upper end) is opposite to the lower surface of the reformer 6. The plural gas passages 22 which are arranged in parallel to each other and through which a reformed gas from the manifold 8 flows are provided in the inside of the cell support 21 from one end (lower end) to the other end (upper end) in the longitudinal direction.

The interconnector 26 is provided on one planar surface (at the left side of a fuel cell stack 10-1 of the first row in Fig. 2) of the cell support 21.

The fuel electrode layer 23 is laminated on the other planar surface (at the right side of the fuel cell stack 10-1 of the first row in Fig. 2) of the cell support 21 and on the front and rear surfaces and the both ends thereof are joined to both ends of the interconnector 26.

The solid oxide electrolyte layer 24 is laminated on the fuel electrode layer 23 so as to cover the entire fuel electrode layer 23, and each end of the solid oxide electrolyte layer are joined to each end of the interconnector 26.

The air electrode layer 25 is laminated on the main portion of the solid oxide electrolyte layer 24, that is, on a portion covering the other planar surface of the cell support 21 such that the air electrode layer 25 faces the interconnector 26 to interpose the cell support 21 therebetween. Therefore, the interconnector 26 is disposed on one outside surface (at the left side of the fuel cell stack 10-1 of the first row in Fig. 2) of each cell 20 and the air electrode layer 25 is disposed on the other outside surface (at the right side).

In other words, each cell 20 includes the cell support 21 having the gas passages 22 and is configured such that the fuel electrode layer 23, the solid oxide electrolyte layer 24, and the air electrode layer 25 are laminated in this order on one surface of the cell support 21 and the interconnector 26 is further formed on the other surface of the cell support 21.

The plural fuel cells 20 are arranged in the transverse direction and are joined in a row via the collector members 30. That is, as indicated in the fuel cell stack 10-1 of the first row in Fig. 2, the plural cells 20 in a row are connected with each other in series in such a manner that the interconnector 26 disposed at the left side of each cell 20 is joined to the air electrode layer 25 of the left adjacent cell 20 via the collector member 30 and the air electrode layer 25 disposed at the right side of each cell 20 is joined to the interconnector 26 of the right adjacent cell 20 via the collector member 30.

In addition, at the rear side of the fuel cell stack 10-1 of the first row in Fig. 2, a fuel cell stack 10-2 at the second row is provided, but in the fuel cell stack 10-2 of the second row, the cells 20 are arranged in a right-left reverse direction with respect to the fuel cell stack 10-1 of the first row.

The fuel cell stack 10-1 of the first row and the fuel cell stack 10-2 of the second row are connected with each other in series in such a manner that the collector member 30 attached to the interconnector 26 of the leftmost cell 20 of the fuel cell stack 10-1 of the first row and the collector member 30 attached to the air electrode layer 25 of the leftmost cell 20 of the fuel cell stack 10-2 of the second row are connected with each other by a conductive member 40.

In the hot module 1, a fuel for producing hydrogen such as city gas, LPG, methanol, DME, and kerosene, and water for reforming are supplied to the reformer 6 from the supply tube 3 of fuel, water, and air for ATR. In the reformer 6, a hydrogen-enriched fuel gas (reformed gas) is generated mainly by a steam reforming reaction. The generated reformed gas is supplied to the manifold 8 for distribution through the reformed gas supply tube 7.

The reformed gas supplied to the manifold 8 is distributed to the fuel cells 20 constituting the fuel cell stack 10, and is supplied to the gas passage 22 formed in a support 21 of each cell 20, and then ascends the gas passage 22. In this process, hydrogen in the reformed gas is permeated to the inside of the cell support 21 so as to reach the fuel electrode layer 23.

On the other hand, air (oxygen-containing gas) is introduced to the inside of the module case 2 from the supply tube 4 of air for a cathode and supplied to the fuel cells 20 constituting the fuel cell stack 10. Then, oxygen in air reaches the air electrode layer 25 of each cell 20.

According to this, in each fuel cell 20, the electrode reaction of the following Formula (1) occurs in the air electrode layer 25 at the outside, and the electrode reaction of the following Formula (2) occurs in the fuel electrode layer 23 at the inside, thereby generating power.

$$\text{Air electrode: } 1/2O_2 + 2e\text{-} \rightarrow O^{2\text{-}} \text{ (solid electrolyte)} \qquad (1)$$

$$\text{Fuel electrode: } O^{2\text{-}} \text{ (solid electrolyte)} + H_2 \rightarrow H_2O + 2e^- \qquad (2)$$

Among the reformed gas flowing through the gas passage 22 of the support 21 in the cell 20, the reformed gas which has not been used in the electrode reaction is allowed to flow out from the upper end of the support 21 to the inside of the module case 2. The reformed gas allowed to flow out to the inside of the module case 2 is allowed to be combusted at the same time of flowing out. An appropriate ignition means (not illustrated) is provided in the module case 2. Upon the reformed gas is started to flow out to the inside of the module case 2, the ignition means is allowed to be operated so as to start combustion. In addition, among the air introduced to the inside of the module case 2, the air which has not been used in the electrode reaction is used in combustion. The temperature in the module case 2 is increased to be a high temperature of, for example, about 600 to 1,000°C due to the power generation in the fuel cell stack 10 and the combustion of excessive reformed gas. The combustion gas generated by the combustion in the module case 2 is exhausted from the exhaust port 5 to the outside of the module case 2.

The fuel cells 20 will be described in more detail.

The cell support 21 is demanded to have gas permeability (to be porous) for transmitting the fuel gas to the fuel electrode layer 23 and to have a conductive property for collecting power through the interconnector 26. The cell support 21 can be made of cermet satisfying such a demand. Specifically, the cell support 21 is made of a nickel cermet obtained by appropriately performing reduction treatment or the like on a complex oxide composition containing at least nickel oxide. The complex oxide composition may contain one or two or more kinds of metal oxide selected from at least scandium, yttrium, lanthanum, cerium, titanium, and zirconium, as components other than nickel oxide. Incidentally, by the reduction treatment, it is considered that components other than nickel oxide are not concerned with redox reaction substantially. In addition, in the complex oxide composition before the reduction treatment of the cell support 21, a ratio of the nickel oxide is set to be 50% by weight or more (50 to 90% by weight, and preferably 60 to 80% by weight).

A cell constituting layer which is formed on the cell support 21 will be further described.

The fuel electrode layer 23 is made of porous conductive ceramics.

The solid oxide electrolyte layer 24 needs to have a function as an electrolyte used to bridge electron conduction and ion conduction between electrodes and to have a gas barrier property in order to prevent leakage of a fuel gas and air. Generally, the solid oxide electrolyte layer 24 is made of a solid electrolyte containing oxide such as $ZrO_2$ and $CeO_2$.

The air electrode layer 25 is made of conductive ceramics and has gas permeability.

The interconnector 26 may be made of conductive ceramics. However, since the interconnector 26 contacts a fuel gas and air, the interconnector 26 has a reduction resistance and an oxidation resistance. Furthermore, the interconnector 26 is a dense substance in order to prevent leakage of a fuel gas flowing through the gas passage 22 formed in the cell support 21 and air flowing to the outside of the cell support 21.

The collector member 30 is configured to include a member that has an appropriate shape and is made of an elastic metal or an alloy. The conductive member 40 can be made of an appropriate metal or alloy.

Incidentally, in the SOFC system as described above, the system needs to be stopped at some frequency for various reasons such as a user's choice, a purpose of exhibiting energy saving effect at a maximum, or a problem in a device or a utility. Due to this stop process and the following restart process, various problems in durability occur.

In particular, after stopping the supply of the reformed gas to the fuel cell stack 10 in the stop process and before the fuel cell stack 10 has not completely cooled, air flows into the cell support 21 and the fuel electrode layer 23, so that a serious problem occurs due to the oxidation of the cell support 21 or occurs when the cell support 21 is reduced from the oxidation state by restarting.

Generally, if the oxidation and reduction of the cell support containing nickel is repeated, transformation such as expansion, contraction, or bending occurs in a cell, and thus, the cell itself is damaged, or a crack or gap is generated between the cell and a member adjacent to the cell. Therefore, there is a possibility that various problems are caused, such as a drop in a cell voltage or a temperature distribution change of the reformer according to a change in the combustion state in the upper portion of the cell.

It is considered that such problems occur due to the following mechanism as described below.

In the stop process of the SOFC system, the supply of the fuel gas (reformed gas) is generally continued even after the power generation is stopped. The fuel gas which has not been used in the power generation is reacted with air supplied from the circumference in the combustion space above the fuel cell stack 10 so as to be combusted, but the fuel cell stack 10 is gradually cooled down during this combustion. When the fuel cell stack 10 is cooled down to a set temperature, the supply of the raw fuel to the reformer 6 is stopped and the supply of the reformed gas to the fuel cell stack 10 is also stopped at the same time. Since the temperature of the reformer 6 is decreased in accordance with the temperature decrease of the fuel cell stack 10, there is a lower limit of the temperature at which the reformed gas is continuously supplied in response to the request of the reformer 6 such as a catalyst activity used in the reforming reaction or vaporization and dispersion of water used in reforming. Accordingly, the supply of the reformed gas needs to be stopped at any time point from a state of stopping power generation to a complete stop state in which the fuel cell stack 10 or the reformer 6 is cooled down to room temperature.

When the supply of the reformed gas is stopped, air supplied from the supply tube 4 of air for cathode passes through the gas passage 22 of the cell support 21 and then back diffusion of the air occurs. In view of the start of inflow of air and a temperature of the support of each unit of the fuel cell stack 10 at this time point, if inflow of air is started at or above a temperature at which nickel metal in the support 21 is subjected to oxidation, nickel is oxidized. Since the support 21 is a complex (cermet) of metal nickel and oxide ceramics, nickel metal in the support 21 is partially turned into nickel oxide. The cell is gradually cooled down through such a process, and eventually, the oxidation degree converges to a certain degree such that the system is completely stopped.

Next, when the system is restarted from a state in which nickel in the support 21 is partially oxidized, a raw fuel and water, and if needed, air for ATR, are introduced to the reformer 6, and then a hydrogen-containing reformed gas is supplied to the fuel cell stack 10 by a steam reforming reaction (SR) or a partial oxidation reaction (POX). According to this, most of the partially-oxidized nickel in the support 21 is returned to a state of metal nickel which is completely reduced again. The present inventors found that there is a strong correlation between a case in which oxidation and reduction of nickel metal in the cell support 21 is repeated in this manner and a process from cell voltage drop to cell damage.

In other words, the present inventors found that the cell damage risk of the fuel cell stack as described above can be determined by a transition of cell voltages. They have further continued the research and then found that, when the oxidation degree after the stop is increased, the voltage drop is increased, and this is suppressed by extending a time for passing through a reduction temperature zone at the time of start-up.

Herein, regarding the nickel in the cell support 21, although the nickel is present as nickel oxide after calcining treatment and before reduction treatment of the support, most of the nickel is reduced to metal nickel by performing the reduction treatment after the cell configuration is completed or after the cells are constituted as a stack. However, this state is disrupted at the time when the reducing gas is stopped to flow in accordance with the stop of the fuel cell system, and a certain ratio of nickel atoms are oxidized by oxygen in air reversely diffused to the gas passage 22 in the cell support 21 such that the nickel is present as nickel oxide.

Therefore, in the present embodiment, a degree to which nickel metal in the cell support 21 is oxidized after stopping the power generation is considered as an index for durability evaluation. This oxidation degree is defined as a Ni oxidation degree by the following formula.

Ni oxidation degree = (Number of moles of Ni atoms that are present as NiO among Ni atoms contained in the cell support) / (Number of moles of all Ni atoms in the cell support) $\times$ 100 (%)

Herein, the Ni oxidation degree may be obtained by measuring the cell support with an instrumental analytical technique such as XRD or XPS. However, in a more direct manner, if the ratio of nickel contained in the cell support is already known, the Ni oxidation degree can be calculated from an increase and decrease in weight before and after performing a certain oxidation or reduction treatment.

For example, in a technique in which the Ni oxidation degree of the cell support is measured by an increase in weight due to oxidation at a high temperature, the Ni oxidation degree in a partial oxidation state can be obtained by the following formula based on a maximum weight change ratio (increase ratio) $R_{max}$ (to be obtained in advance) from the complete reduction state to the complete oxidation state, and a weight change ratio (increase ratio) R2 from the partial oxidation state after stopping the power generation to the complete oxidation state.

$$\text{Ni oxidation degree} = ((R_{max}/R2) - 1) / (R_{max} - 1) \times 100 \ (\%)$$

Herein, $R_{max}/R2$ corresponds to a weight change ratio R1 from the complete reduction state to the partial oxidation state.

When the weight change is measured, the cell support itself may be used actually as a sample to perform the weight measurement, but it is more preferably to use a measuring instrument such as TG-DTA.

If there is a means capable of measuring a weight while a reducing gas such as hydrogen gas flow flows under heating, the Ni oxidation degree can be similarly calculated from a decrease in weight to the complete reduction. That is, the weight change ratio "R1 = $W_x/W_0$" from the complete reduction state to the partial oxidation state is obtained from a weight $W_x$ in the partial oxidation state and a weight $W_0$ in the complete reduction state, so that "Ni oxidation degree = (R1 - 1) / ($R_{max}$ - 1) $\times$ 100 (%)" can be obtained. In a case in which the Ni oxidation degree is low, the above method may be more preferably used.

Therefore, in any case, the Ni oxidation degree can be obtained based on the change in weight (maximum weight change ratio) which has been determined in advance between the complete reduction state and the complete oxidation state and the change in weight (change ratio) from the partial oxidation state after the power generation stops to the complete oxidation or reduction state.

Next, a correlation between durability of the cell and a Ni oxidation degree, more specifically, a threshold value of the Ni oxidation degree that is an index of durability evaluation will be discussed.

In general, the durability of the cell is preferably monitored by a power generation voltage of the cell at the time of current sweep under a constant operation condition of the system If any problem occurs in the cell stack structural body including the cell support or a peripheral member, even in a case of gas leakage due to cell support damage, an increase in resistance according to detaching of a cell laminated structure, degradation in the contact state with current collector metal according to cell deformation, or the like, the problem may be observed as a voltage drop of the cell stack in many cases. Therefore, durability (residual life) of the cell stack can be presumed by a change (drop) in the cell voltage with respect to the initial stage. In order to suppress such a cell voltage drop and maintain a cell voltage to be a sufficient level even after the start-and-stop operation is performed 240 times that is the practically usable number of times of the start-and-stop operation, it is necessary to suppress the Ni oxidation degree after the stop to be low.

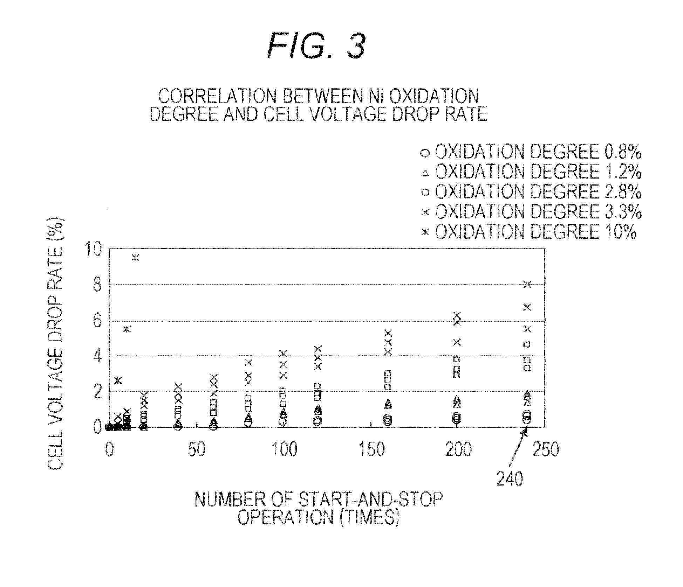

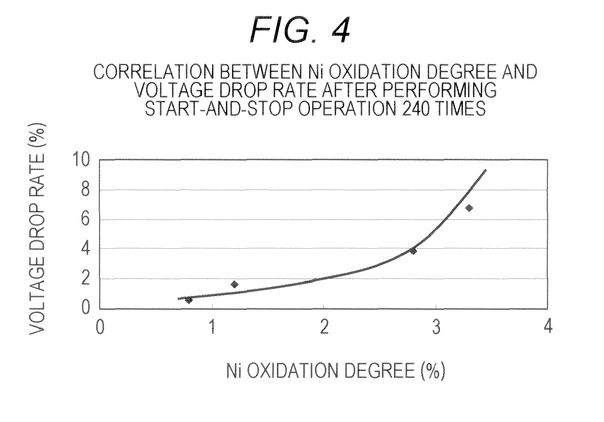

Fig. 3 illustrates a result obtained by plotting a change in cell voltage drop rates (particularly, a cycle-dependent voltage drop rate due to the start-and-stop operation to be described below) of each system in a verification test in which plural systems are started and stopped under conditions of different Ni oxidation degrees after the stop. In addition, Fig. 4 is a view obtained by focusing data obtained when performing the start-and-stop operation 240 times among the results of Fig. 3 and in which the horizontal axis indicates a Ni oxidation degree and the vertical axis indicates an average of voltage drop rates.

The cell voltage drop rate is expressed by an initial voltage $V_{ini}$ and a voltage $V_{final}$ after service life (or after an accelerated durability test on the assumption of service life), that is, expressed as "(1 - $V_{final}$ /$V_{ini}$) × 100 [%]", based on voltage summation V of the cell stack under a rated equivalent operation condition (generally, at the time of the current sweep of 0.2 to 0.3 A/cm$^2$).

From the results of Fig. 3 and Fig. 4, in the system having a high Ni oxidation degree after the stop, the cell voltage drop rate is large and a change thereof is rapid. In order to improve durability, it can be understood that it is effective to suppress the Ni oxidation degree after the stop to be low.

Incidentally, in general, the service life required for a household stationary fuel-cell system is at least 10 years and preferably 15 years. If cases of stop by a user's choice, stop corresponding to an operation of a gas meter provided in a fuel utility line, or stop at the time of emergency (when a slight error occurs) or maintenance are included, the number of times of the start-and-stop operation to be envisioned for 10 years is estimated to be 240 times. Therefore, the system is also required to be resistant to at least 240 times of the start-and-stop operation.

In view of the fuel-cell system as an energy saving device, an acceptable total voltage drop rate is at most 15% and preferably 10% or less.

The total voltage drop rate includes: (1) a temporal voltage drop due to the long-term use (cell thermal degradation or the like); (2) a cycle-dependent voltage drop due to the start-and-stop operation; and (3) a voltage drop due to usage environment such as incorporation of impurities. However, among these, the invention focuses on "(2) a cycle-dependent voltage drop due to the start-and-stop operation".

Therefore, in Fig. 3 and Fig. 4, the cycle-dependent voltage drop rate due to the start-and-stop operation is simply referred to as the "voltage drop rate" and this is considered as an index of durability maintenance.

Specifically, a voltage drop rate, which is substantially influenced only by the start-and-stop operation, can be distinguish by measuring a voltage drop rate dependent on the number of times of the start-and-stop operation by a start-and-stop cycle test or the like and subtracting, from the measured value, a voltage drop rate estimated by a continuous operation test, an impurity incorporation test, or the like which is separately carried out.

If effects due to multiple factors are taken into consideration, the (narrowly-defined) voltage drop rate due to the 240 times of the start-and-stop operation is at most 5% and preferably 3% or less.

Therefore, it is desirable that the voltage drop rate due to 240 times of the start-and-stop operation be 5% or less and preferably 3% or less by suppressing the Ni oxidation degree after the stop to be low.

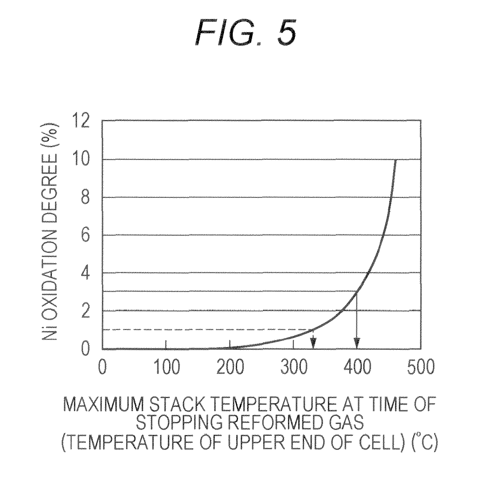

Fig. 5 illustrates a result obtained by measuring Ni oxidation degrees at each temperature of the upper end of the cell support 21 (maximum stack temperature at the time of stopping the reformed gas) that is the maximum temperature portion of the fuel cell stack 10 when the reformed gas is stopped at the stop process of the SOFC system (when the supply of the fuel gas to the reformer 6 is stopped and then the supply of the reformed gas to the fuel cell stack 10 is stopped).

From the view of Fig. 5, it is clear that the maximum stack temperature (cell upper end temperature) at the time of stopping the reformed gas needs to be set at about 400°C or lower (preferably, 330°C or lower) in order to suppress the Ni oxidation degree to be low. Therefore, this temperature can be determined as the "minimum oxidation temperature of nickel metal".

Therefore, regarding the stop control of the SOFC system, the fuel supply amount or the air supply amount to the fuel cell stack is appropriately controlled until the maximum stack temperature is below the minimum oxidation temperature of nickel metal, so that the Ni oxidation degree after the stop is suppressed to be within a predetermined threshold value.

The Ni oxidation degree is used as an index of durability evaluation to evaluate durability of the SOFC system. In addition, the system is designed such that this Ni oxidation degree becomes a predetermined value or less. Accordingly, at the time of the normal stop of the system, by performing the stop control to be described later, it is possible to keep the Ni oxidation degree after the stop within a predetermined value or less and to make the voltage drop rate due to 240 times of the start-and-stop operation be 5% or less, and preferably 3% or less.

Incidentally, regarding the design of the SOFC system, the Ni oxidation degree after the stop of actual equipment is measured and is provided on the design (setting of a power generation stop condition) with feedback such that the Ni oxidation degree is within a predetermined value.

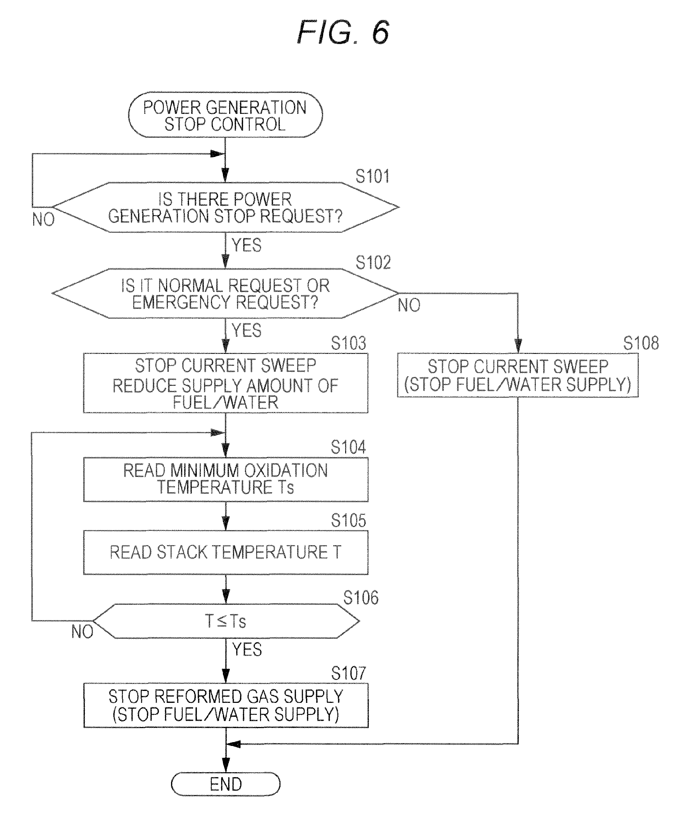

Fig. 6 is a flowchart of the power generation stop control.

In S101, it is determined whether there is a power generation stop request, and when there is a power generation stop request, the process proceeds to S102.

In S102, it is determined whether the power generation stop request is a normal request for regular maintenance or is an emergency shutdown (emergency S/D) request due to the occurrence of some type of system problem, or the like. This may be configured to be selectively operated by an inspector or user of the system.

At the normal request, the process proceeds to S103. The current sweep is stopped by opening a power generation circuit and the supply amount of fuel and water to the reformer is reduced at the same time.

In S104, a minimum oxidation temperature Ts of nickel metal is read. The minimum oxidation temperature Ts is stored on an internal memory and can be rewritten by a service technician at the time of maintenance or the like so that the Ni oxidation degree after the stop is a predetermined value or less.

In S105, a temperature (stack temperature) T of the fuel cell stack is measured by a temperature sensor in the system.

In S106, the measured stack temperature T and the minimum oxidation temperature Ts are compared with each other and then it is determined whether or not to be T ≤ (is less than or equal to) Ts.

When T > (is greater than) Ts, the process returns to S104 and S105, and the measurement and determination of the stack temperature T is continued. When T ≤ (is less than or equal to) Ts, the process proceeds to S107.

In S107, the supply of fuel and water to the reformer is stopped and the supply of reformed fuel to the fuel cell stack is stopped at the same time. Moreover, although not illustrated in the flow, the stack temperature T is monitored after that, and when the stack temperature T reaches room temperature, the system is completely stopped.

In this manner, when the Ni oxidation degree in the cell support of the fuel cell stack is controlled at the normal power generation stop request so that the Ni oxidation degree is suppressed to be a predetermined value or less, it is possible to suppress damages to the fuel cell stack due to the cycle of oxidation and reduction in accordance with the start-up and stop of the SOFC system.

Therefore, the present inventors focused attention on the fact that the cell damage can be effectively suppressed by suppressing the reduction rate to be low in the process of reducing oxidized Ni by an increase in temperature at the time of the system start-up, based on the above-described cell damage mechanism, even in the case of the emergency stop in which it is not possible to perform the control at the normal stop of the system. They found that when the start-up control is performed according to the Ni oxidation degree, the start-up control can be completed at the minimum time and the power generation can be started while a function of controlling durability degradation due to the reduction is secured and required durability (actual service life) is satisfied. Therefore, the invention of the present application was made based on the above findings.

There may be a case in which the emergency stop is necessary during operating the system due to some causes such as fuel shutoff, system power failure, or failure of various pumps.

In such a case, it is determined that the power generation stop request is urgently required in S102. The process proceeds to S108 and the current sweep and the supply of fuel and water are stopped at the same time.

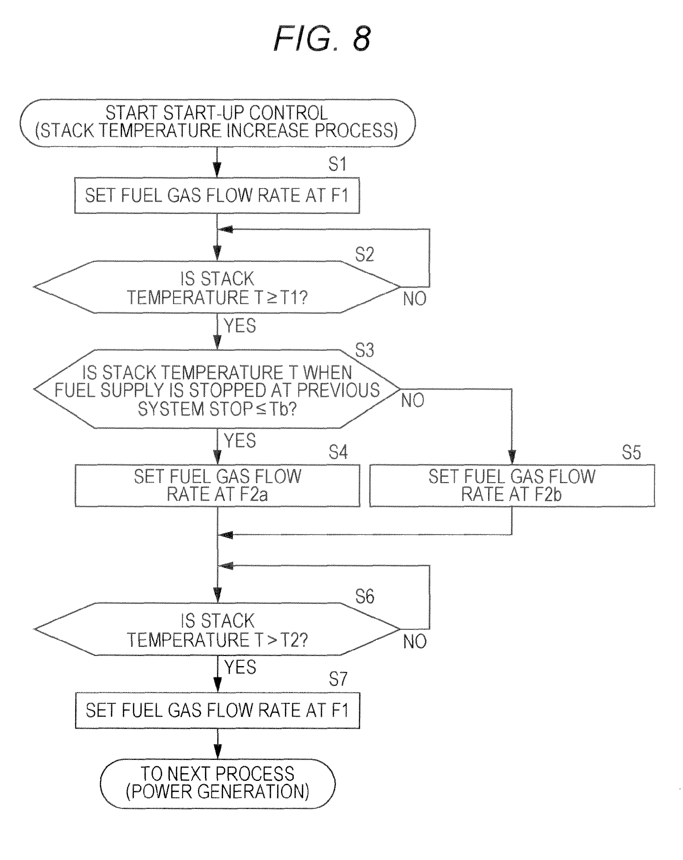

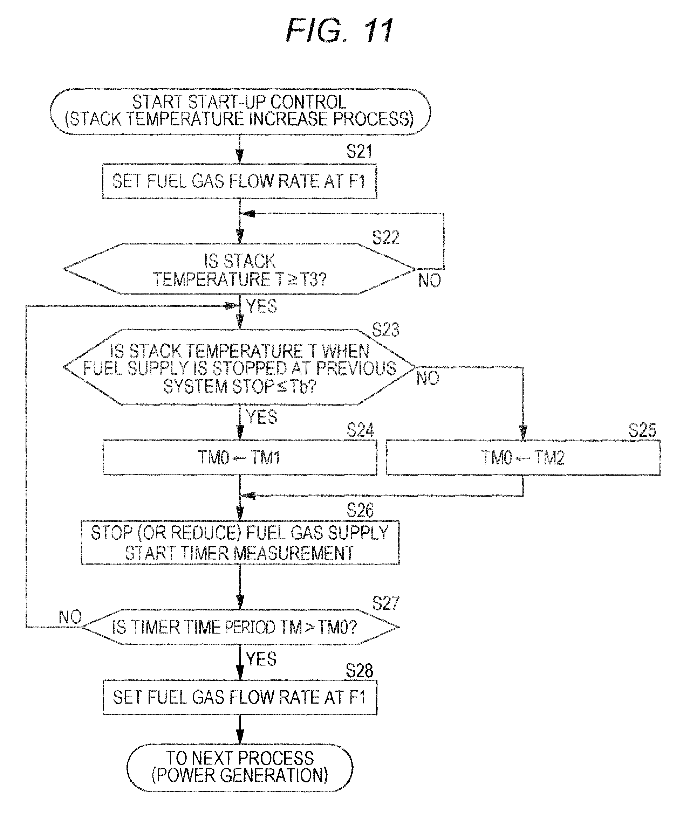

In this case, although the maximum stack temperature at the time of stopping the reformed gas cannot be lowered to the "minimum oxidation temperature of nickel metal", the stack temperature at this time is stored and a time for passing through a reduction temperature zone at the time of the start-up is extended based on the flowchart of Fig. 8 or Fig. 11, to be described later, so that it is found that the degradation is suppressed. Even if the normal stop is performed, by using the start-up method illustrated by the flowchart of Fig. 8 or Fig. 11, it is possible to suppress the degradation and thus the start-up method can achieve high general versatility.

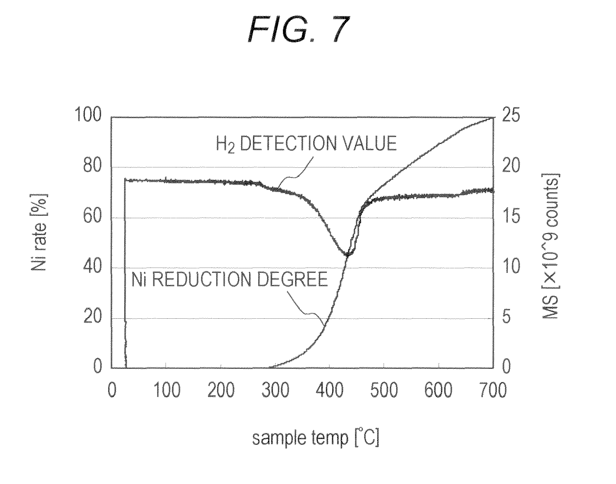

Fig. 7 illustrates a result obtained by performing a temperature programmed reduction (TPR) with respect to a powdery mixed oxide sample having the same composition as the cell support used in the invention.

When the temperature was increased from room temperature to 700°C at a rate of 10°C/min in an atmosphere of 25% $H_2$/Ar, a $H_2$ concentration of a sample chamber outlet was measured by a mass spectrum (MS) intensity.

In addition, it is presumed that a difference between the MS intensity at room temperature and the MS intensity during reduction was used for oxidized Ni reduction in the support, and then the Ni oxidation degree of the support is presented.

From the result, it was confirmed that the oxidized Ni in the support generated by partial oxidation was started to be reduced at a temperature slightly lower than 300°C and the reaction was rapidly advanced in a temperature range of higher than 300°C.

Therefore, for example, while the temperature is maintained in a temperature zone from, for example, slightly lower than 300°C (≈ (which is approximately equal to) 270°C) to 350°C in which the reduction rate can be maintained to be low, the reduction treatment is performed, so that it is possible to suppress performance degradation in accordance with a physical change such as a pore structure change or a stress distribution change which occurs in the fuel cell stack structure and thus to secure the durability. However, when the temperature is maintained to be in the temperature zone even after the reduction treatment, this is not contributed to durability improvement and a time to the power generation start is just extended wastefully.

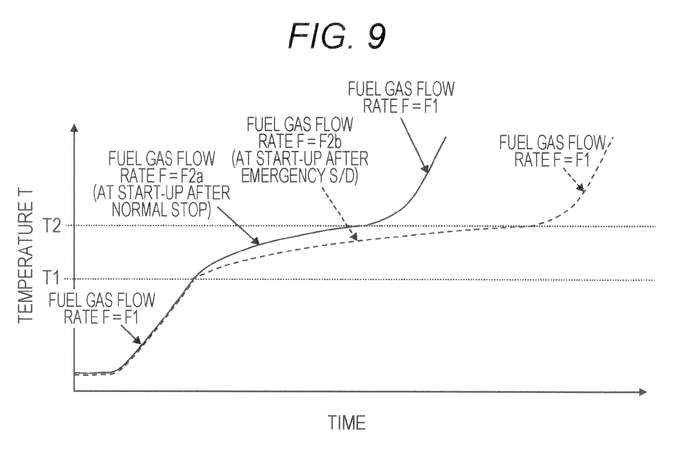

Fig. 8 is a flowchart of start-up control using a method found by the present inventors based on the above findings according to a first embodiment. Fig. 9 is a time chart illustrating a state change at the time of the start-up control of the first embodiment.

In Fig. 8, a flow rate of the fuel gas to be supplied from the reformer 6 to the fuel cell stack 10 is set at F1 in S1. Moreover, the fuel gas flow rate can be set according to the setting of a raw fuel supply amount to the reformer 6.

In S2, it is determined whether the temperature T of the fuel cell stack 10 (hereinafter, referred to as a stack temperature) increases to a first temperature T1. Herein, the first temperature T1 is a temperature of around the reduction start temperature at which a reduction rate of oxidized Ni in the cell support is greater than or equal to a predetermined rate, and for example, the first temperature T1 is set at a temperature of around 270°C.

After the temperature increases to the first temperature T1, in S3, it is determined whether the stack temperature T when the fuel supply is stopped at the previous system stop is a predetermined temperature Tb or lower. Herein, the predetermined temperature Tb is set at a temperature used for determining whether the system is normally stopped or is rapidly shut down. Moreover, even in a case in which the system is normally stopped at a higher stack temperature in a conventional manner, as well as a case in which the stop control is performed as described in Fig. 6, the stack temperature T when the fuel supply is stopped at the normal stop is sufficiently lower than the stack temperature at the emergency shutdown. Therefore, by appropriately setting the predetermined temperature Tb, the determination can be performed reliably.

When it is determined that the stack temperature T at the previous fuel supply stop is the predetermined temperature Tb or lower in S3, the fuel gas flow rate F is set at F2a that is lower than F1 in S4 so as to decrease the fuel gas flow rate F.

Thus, since the fuel gas combustion amount is reduced in the combustion portion, a temperature in the module case 2 is reduced. Furthermore, the increase rate of the stack temperature T is decreased.

On the other hand, when it is determined that the stack temperature T at the previous fuel supply stop is higher than the predetermined temperature Tb in S3, the fuel gas flow rate F is set at F2b that is even lower than F2a in S4 so as to decrease the fuel gas flow rate F more.

Thus, the increase rate of the stack temperature T is decreased more.

In S6, it is determined whether the stack temperature T is higher than the first temperature T1, for example, whether the stack temperature T reaches a second temperature T2 which is set at a temperature of around 350°C. The control is continued until the stack temperature T reaches the second temperature T2. When the stack temperature T reaches the second temperature T2, the start-up control (stack temperature increase process) is ended and the fuel gas flow rate F is returned to F1 in S7 so as to increase the fuel gas flow rate F. After the stack temperature T is further increased to a predetermined temperature, the process proceeds to the next process, such as power generation start.

The start-up control operation will be described.

At the initial stage in which the stack temperature T is lower than the first temperature T1 and is a low temperature at which oxidized Ni is not reduced effectively, the fuel gas flow rate F1 is set and the combustion amount in the combustion portion is increased. Therefore, the temperature of the fuel cell stack 10 is increased rapidly.

When the stack temperature T is the first temperature T1 or higher and the reduction rate of oxidized Ni is greater than or equal to a predetermined rate, oxidized Ni is started to be reduced effectively. After that, by reducing the fuel gas flow rate F and reducing the combustion amount in the combustion portion, the temperature increase rate of the fuel cell stack 10 is reduced.

Thus, a time period TM during which the stack temperature T passes through the temperature zone from the first temperature T1 to the second temperature T2 is extended to a predetermined time period or longer, and thus, the reduction rate of oxidized Ni can be suppressed to be low. As a result, a temperature difference between the respective units of the cell support (degree of reduction progress) is maintained to be low and it is possible to suppress performance degradation in accordance with a physical change such as a pore structure change or a stress distribution change which occurs in the fuel cell stack structure. Therefore, favorable power generation performance can be secured by reducing the voltage drop rate, and thus the durability (durability life) of the system can be improved.

Herein, when the stack temperature T at the previous fuel supply stop is the predetermined temperature Tb or lower, the normal stop is previously performed. Therefore, a time period TM for passing through the temperature zone from the first temperature T1 to the second temperature T2 is set according to the Ni oxidation degree corresponding to the stack temperature at the time of fuel supply stop at the normal stop, and a fuel gas flow rate F2a is set according to the time period TM for passing through the temperature zone. Moreover, in a case in which the stop control of Fig. 6 is performed at the time of the normal stop, the Ni oxidation degree after the stop is less than that in a case in which the normal stop is performed by the conventional method in which the stop control is not performed. Therefore, the passing time period TM can be set to be shorter.

On the other hand, when the stack temperature T at the previous fuel supply stop is higher than the predetermined temperature Tb, the previous system is rapidly shut down, and the fuel supply is stopped in a very high temperature state. Therefore, there is a high probability that the Ni oxidation degree is increased.

As described above, in a case in which the reduction is performed in the temperature zone in which the low reduction rate can be maintained, when the Ni oxidation degree is high, the reduction treatment requires time. Therefore, the temperature increase rate is further slowed and a time it remains in the temperature zone in which the low reduction rate can be maintained needs to be extended.

Therefore, at the time of start-up after emergency shutdown according to the maximum Ni oxidation degree in a case in which the system is urgently shut down at the highest temperature state, a time period TM2 for passing through the temperature zone from the first temperature T1 to the second temperature T2 is set to be longer (for example, 20 minutes) than the time period TM1 (for example, 10 minutes) for passing through the temperature zone at the time of the start-up after the normal stop of the system. The fuel gas flow rate is set at F2b that is smaller than F2a so that the temperature increase rate is further slowed according to an increase in the time period TM for passing through the temperature zone.

In this manner, in the case of the restart-up from a state in which the Ni oxidation degree is high after the system emergency shutdown, by setting the time period TM2 for passing through the temperature zone to be longer, damage to the cell is suppressed, so that a short-term failure risk can be reduced and long-term durability can be improved. Therefore, the voltage drop rate is reduced to satisfy required durability (actual service life), and thus, favorable power generation performance can be secured during the actual useful period of the system.

Herein, as the time for passing through the temperature zone in which the low reduction rate can be maintained is extended, the reduction rate can be further reduced. However, if the start-up control becomes longer, and thus the power generation is too slow, this is not practical. In this embodiment, the fuel gas flow rates F2a and F2b are set based on the Ni oxidation degree after the stop of the system so that oxidized Ni is allowed to pass through the predetermined temperature zone by a time necessary and sufficient for completion of the reduction treatment while the required durability (actual service life) is satisfied and favorable power generation performance is secured during the actual useful period of the system. According to this, the start-up control is completed within a predetermined time (for example, three hours), and thus power generation can be started.

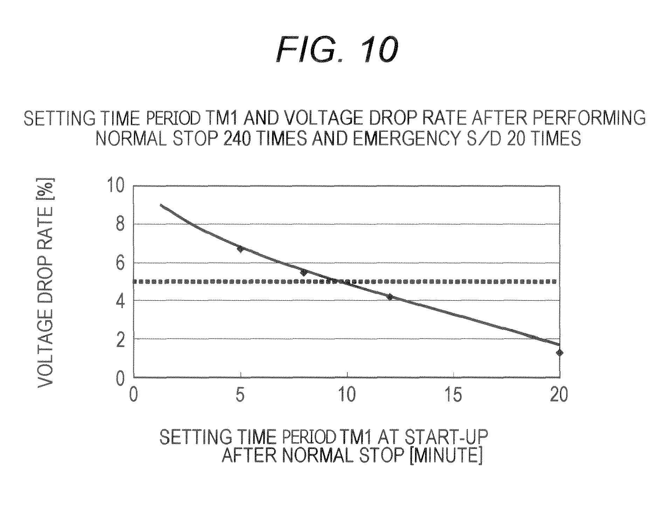

Fig. 10 illustrates a voltage drop rate with respect to the setting time period TM1 for passing through the temperature zone at the time of the start-up after the normal stop in a case in which it is assumed that the normal stop is performed 240 times and the emergency shutdown is performed 20 times during the actual useful period of the system. Incidentally, the setting time period TM2 for passing through the temperature zone at the time of the start-up after the emergency shutdown is set to 20 minutes.

When the setting time period TM1 is set to 10 minutes or longer, it is clear that the voltage drop rate can be reduced and favorable power generation performance can be secured. In other words, even in a case in which the normal stop is performed by the conventional method, the Ni oxidation degree after the stop is a predetermined value or more, the voltage drop rate exceeds the limit thereof, and required durability (actual service life) is not satisfied, by performing the present start-up control in which the setting time period TM1 is 10 minutes or longer, the voltage drop rate can be reduced and required durability can be satisfied.

Fig. 11 is a flowchart of start-up control according to second and third embodiments.

In step S21, the flow rate of the fuel gas to be supplied from the reformer 6 to the fuel cell stack 10 is set at F1.

In step S22, it is determined whether the stack temperature T is increased to a third temperature T3. Herein, the third temperature T3 may be set at a temperature comparable to the second temperature T2 of the first embodiment that is higher than the first temperature by a predetermined temperature at which a reduction rate of oxidized Ni in the cell support is greater than or equal to a predetermined rate. For example, the third temperature T3 is set at a temperature of around 350°C.

After the stack temperature T increases to the third temperature T3, in S23, it is determined whether the stack temperature T when the fuel supply is stopped at the previous system stop is the abovementioned temperature Tb or lower.

When it is determined that the stack temperature T at the previous system stop (fuel supply stop) is the predetermined temperature Tb or lower in S23, a setting value TM0, which will be described later, obtained by timer measurement of measuring a time period from that time to a time at which the fuel gas supply to the fuel cell stack 10 is maintained to be stopped or reduced, is set at TM1 in S24. The setting value TM1 in a case in which the system is normally stopped is set, for example, at 10 minutes or longer, preferably 15 minutes or longer, and more preferably 20 minutes or longer.

When it is determined that the stack temperature T at the previous system stop (fuel supply stop) is higher than the predetermined temperature Tb in S23, the setting value TM0 during the same elapsed time as described above is set at TM2 that is greater than TM1, in S25. The setting value TM2 in a case in which the system is urgently shut down is set so that a ratio TM2/TM1 of the setting value TM2 to the setting value TM1 is, for example, TM2/TM1 = 1.1 to 4, preferably TM2/TM1 = 1.2 to 3.3, and more preferably TM2/TM1 = 1.5 to 2.5.

Subsequently, in S26, the fuel gas supply to the fuel cell stack 10 (fuel supply to the reformer) is stopped.

In S27, it is determined whether a measurement time period TM of the timer reaches the setting value TM0 (TM1 or TM2) and the above operation is repeated by returning the process to S23 until the measurement time period TM reaches the setting value TM0.

When the measurement time period TM reaches the setting value TM0, the process proceeds to S28, and the stopped fuel supply is restarted (the fuel gas flow rate is set at F1). Thereafter, the fuel supply at the fuel gas flow rate F1 is continued.

After that, the stack temperature T is further increased to a predetermined temperature and then the process proceeds to the next process such as power generation start.

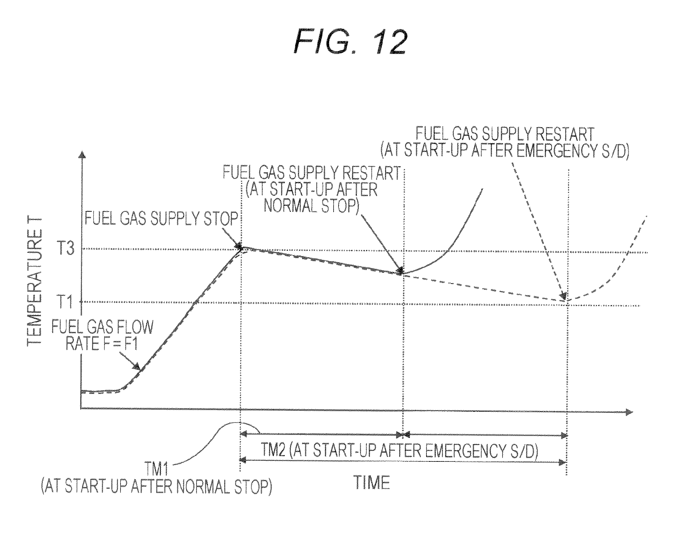

Fig. 12 is a time chart illustrating a state change at the time of the start-up control of the second embodiment.

According to the second embodiment, even after the fuel gas supply is stopped in S26, the temperature may be gradually and continuously increased for a while (this is because a combustion flame temperature in the combustion portion is 900°C or higher at the time of stopping the fuel gas supply and heat in the combustion portion is transmitted from the upper portion of the fuel cell stack 10). Thereafter, the temperature is decreased to the third temperature T3 or lower. However, in a system (module case) having favorable thermal insulation properties, a temperature decrease rate is maintained to be small and the temperature can be maintained in a temperature zone from the first temperature to the third temperature in which the reduction rate can be maintained to be low, for a long period of time.

In this manner, while the temperature is maintained in the temperature zone in which the reduction rate can be maintained to be low for a long period of time, the temperature zone can be allowed to be passed by taking the setting time period TM1 at the time of the start-up after the normal stop of the system. Similarly, the temperature zone of the low reduction rate can be allowed to be passed by taking the setting time period TM2 at the time of the start-up after the emergency shutdown. Therefore, in a manner similar to the first embodiment, the required durability (actual service life) is satisfied while the voltage drop rate is suppressed based on the Ni oxidation degree after the stop of the system, and oxidized Ni is allowed to pass through the temperature zone by a time necessary and sufficient for completion of the reduction treatment. Therefore, the start-up control is completed within a predetermined time period (for example, three hours) and then power generation can be started.

In the present embodiment, after the initial temperature detection, a time for passing through the temperature zone can be controlled easily only by time management.

In addition, at the time point when the temperature reaches the third temperature T3 in S26, instead of stopping the fuel supply, a configuration in which the fuel gas flow rate F is decreased and the decrease rate of the stack temperature T is slowed (third embodiment) may be employed.

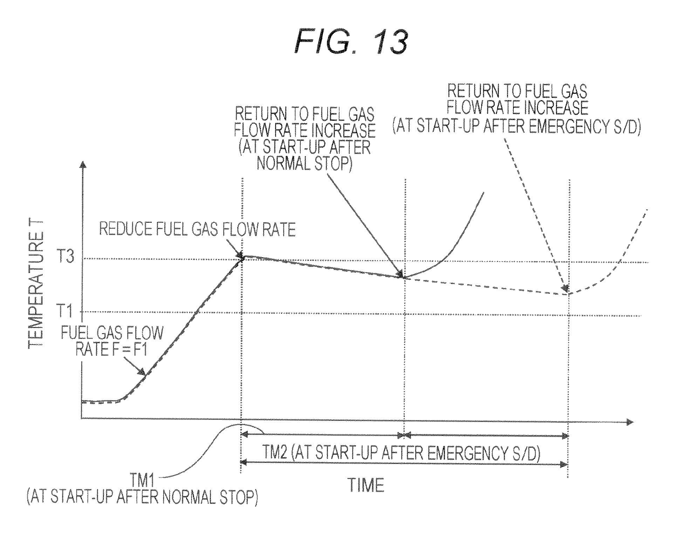

Fig. 13 is a time chart illustrating a state change at the time of the start-up control of the third embodiment.

According to the third embodiment, by reducing the fuel gas supply in S26, the temperature decrease rate is lower than that in the case of stopping the fuel gas supply, and the temperature zone of the low reduction rate can be maintained for a long period of time. Therefore, with respect to a system having poor thermal insulation properties or a system having lowered thermal insulation properties due to the performance degradation during actual service life (for example, 10 years), a time for passing through the temperature zone of the low reduction rate can be secured in accordance with the Ni oxidation degree. Moreover, the required durability (actual service life) is satisfied and favorable power generation performance can be secured during the actual useful service period of the system.

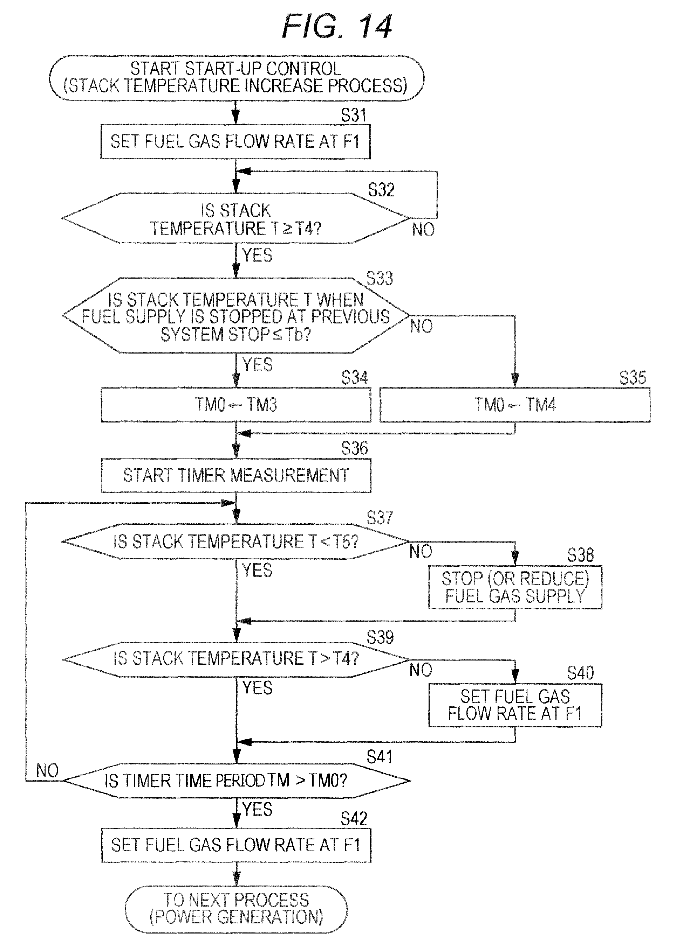

Fig. 14 is a flowchart of start-up control according to fourth and fifth embodiments.

In step S31, the flow rate of the fuel gas to be supplied from the reformer 6 to the fuel cell stack 10 is set at F1.

In step S32, it is determined whether the stack temperature T is increased to a fourth temperature T4 at which a reduction rate of oxidized Ni in the cell support is greater than or equal to a predetermined rate. The fourth temperature T4 may be set at the same temperature of around 270°C as the first temperature T1

After the stack temperature T increases to the fourth temperature T4, in S33, it is determined whether the stack temperature T when the fuel supply is stopped at the previous system stop is the abovementioned temperature Tb or lower.

When it is determined that the stack temperature T at the previous fuel supply stop is the predetermined temperature Tb or lower in S33, the setting value TM0, which will be described later, obtained by timer measurement of measuring a time from that time to a time at which the fuel gas supply is continued, is set at TM1 in S34.

When it is determined that the stack temperature T at the previous fuel supply stop is higher than the predetermined temperature Tb in S33, the setting value TM0 during the same elapsed time as described above is set to TM2 that is greater than TM1 in S35.

Subsequently, the timer measurement is started in S36, and it is determined whether the stack temperature T is lower than a fifth temperature T5 which is set to be higher than the fourth temperature T4 by a predetermined temperature. When the stack temperature T is lower than the fifth temperature T5, the process proceeds to S39. The fifth temperature T5 may be set at the same temperature of around 350°C as the third temperature T3.

When the stack temperature T reaches the fifth temperature T5, the supply of fuel gas is stopped in S38 and then the process proceeds to S39.

In S39, it is determined whether the stack temperature T is higher than the fourth temperature T4, and when the stack temperature T is higher than the fourth temperature T4, the process proceeds to S41.

On the other hand, when it is determined that the stack temperature T is decreased to the third temperature or lower due to the stop of the fuel gas supply, the fuel gas flow rate F is set at F1 in S40 and the fuel gas supply is restarted. After that, the process proceeds to S41.

In S41, it is determined whether the measurement time period TM of the timer reaches the setting value TM0 (TM1 or TM2) and the above operation is repeated by returning the process to S37 until the measurement time period TM reaches the setting value TM0.

When the measurement time period TM reaches the setting value TM0, the process proceeds to S42, and the fuel gas flow rate is set at F1. Thereafter, the fuel supply is continued.

After that, the stack temperature T is further increased to a predetermined temperature and then the process proceeds to the next process, such as power generation start.

In the third embodiment, when the thermal insulation properties of the system is as high as that of the second embodiment, for example, when the fourth temperature is set to be equal to the first temperature and the fifth temperature is set to be equal to the third temperature, the system has the same properties as that of the second embodiment in Fig. 12. When the system is normally stopped previously without decreasing the temperature to the fourth temperature (= the first temperature) after firstly increasing the temperature to the fifth temperature (= the third temperature), it takes the setting time period TM1 to pass through the temperature zone. Similarly, when the system is urgently shut down, it takes the setting time period TM2 to pass through the temperature zone.

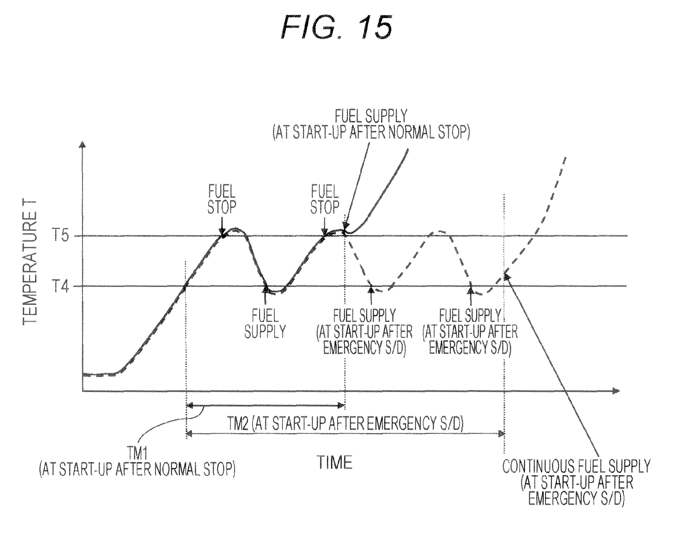

On the other hand, in a case in which the thermal insulation properties of the system is low and the temperature decrease rate is high after stopping the fuel gas supply, as illustrated in the time chart of Fig. 15, the temperature is decreased to the fourth temperature (= the first temperature) during a period from entering the temperature zone until a setting passing time elapses, and the temperature is increased again due to the restart of the fuel supply. While the cycle of decreasing and increasing the temperature is repeated, it takes the setting time period TM1 to pass through the temperature zone, which is near the fourth temperature to the fifth temperature, when the previous system is normally stopped. Similarly, it takes the setting time period TM2 to pass through the temperature zone when the system is urgently shut down. In Fig. 15, a case in which plural times of cycles are repeated is illustrated, but as the thermal insulation properties are enhanced, the cycle length is increased and the number of cycles to be repeated is decreased.

In a case in which the fourth temperature and the fifth temperature are set by narrowing the temperature width within the temperature zone of the first temperature to the third temperature which is set as the temperature zone of the low reduction rate, even in a system having high thermal insulation properties, the temperature zone of the low reduction rate can be allowed to be passed by taking a target time (the setting time period TM1 at the time of the normal stop and the setting time period TM2 at the time of the emergency shutdown) while increasing and decreasing the temperature are repeated in a short cycle. Moreover, if the temperature is set by sufficiently narrowing the temperature width, the reduction treatment can be performed while the stack temperature T is maintained to be an approximately constant target temperature.

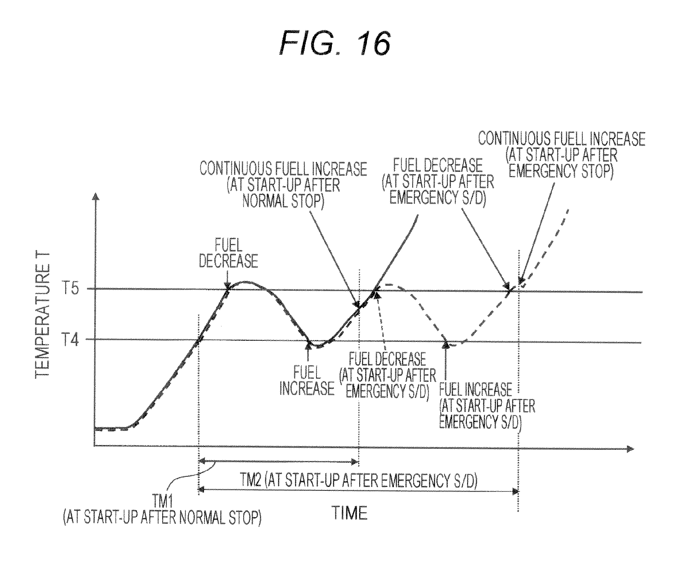

The configuration (the fifth embodiment) in which the fuel gas flow rate F is reduced and the decrease rate of the stack temperature T is slowed may be employed when the temperature reaches the fourth temperature T4 in S38, instead of the fuel supply stop. Fig. 16 is a time chart illustrating a state change at the start-up control of the fifth embodiment. In the present embodiment, the temperature decrease rate is reduced and thus the inversion cycle of increasing and decreasing the temperature is increased. In the present embodiment, the temperature zone may also be set to be narrowed by setting a temperature difference between the fourth temperature T4 and the fifth temperature T5 to be small.

As described above, in the fourth and fifth embodiments, similar to the first to third embodiments, the low reduction rate is maintained to suppress cell damage and the required durability (actual service life) is satisfied. Therefore, while favorable power generation performance is secured during the actual usable period of the system, the start-up control is completed within a predetermined time (for example, three hours) and thus the power generation can be started. By feedback control using the measurement of the stack temperature T and the time measurement using a timer, a predetermined temperature zone can be allowed to be passed by taking a predetermined time and a function of stably improving durability can be achieved regardless of system performances.

The invention can be applied to any case regardless of presence or absence of the stop control illustrated in Fig. 6. For example, even in a case in which the system is stopped in any manner, the configuration may be employed in which the Ni oxidation degree is estimated based on the stack temperature T at the time of the fuel supply stop and the time for passing through a predetermined temperature zone at the time of the start-up control is set based on the estimated Ni oxidation degree.

Moreover, each control described above is a control method which is not broken down as a control system even when a change in external temperature or a temporal change occurs and is based on a cell damage principle. In accordance with full-scale popularization of the SOFC system from now, this control method is considered to be a technique capable of applying to the system even if components are simplified or a control system is simplified.

Incidentally, the embodiments illustrated in the figures are merely examples of the present invention, and of course, the invention includes those directly specified by the described embodiments, as well as various improvements and modifications, which can be conceived by one skilled in the art within the scope of the appended claims.

REFERENCE SIGNS LIST

1                        Hot module

| | | |
|---|---|---|
| 2 | | Module case |
| 3 | | Supply tube of fuel, water and air for ATR |
| 4 | | Supply tube of air for cathode |
| 5 | | Exhaust port |
| 6 | | Reformer |
| 6a | | Reformed gas outlet |
| 7 | | Reformed gas supply tube |
| 8 | | Manifold |
| 10 (10-1, 10-2) | | Fuel cell stack |
| 20 | | Fuel cell |
| 21 | | Cell support |
| 22 | | Gas passage |
| 23 | | Fuel electrode layer |
| 24 | | Solid oxide electrolyte layer |
| 25 | | Air electrode layer |
| 26 | | Interconnector |
| 30 | | Collector member |
| 40 | | Conductive member |
| 50 | | Control unit |
| 51 | | Temperature sensor |

**Claims**

1. A solid-oxide fuel-cell system configured to include: a reformer which generates a hydrogen-enriched fuel gas by a reforming reaction; a fuel cell stack which is provided with a passage of the fuel gas, includes a cell support made of a porous substance having a composition containing nickel metal, and allows to react the fuel gas with air to generate power; and a module case which surrounds the reformer and the fuel cell stack, in the inside of which excessive fuel gas of the fuel cell stack is combusted to increase temperatures of the reformer and the fuel cell stack so that the reformer and the fuel cell stack are maintained in a high temperature state, the solid-oxide fuel-cell system comprising:

   a stack temperature measurement unit that measures a temperature of the fuel cell stack;
   a fuel gas supply amount control unit that controls a fuel gas supply amount supplied from the reformer to the fuel cell stack; and
   a start-up control unit that controls a time period during which nickel metal oxidized in the cell support during increasing a temperature of the fuel cell stack at the time of system start-up, passes through a predetermined temperature zone in which the nickel metal is reduced by the fuel gas to be equal to or longer than a time period set based on an oxidation degree of nickel metal before the system start-up.

2. The solid-oxide fuel-cell system according to claim 1, wherein, with respect to a fuel gas supply amount F1 when a temperature T of the fuel cell stack is lower than a first temperature T1 at which a reduction rate of the nickel metal is greater than or equal to a predetermined value, the start-up control unit reduces a fuel gas supply amount F2 when the temperature T of the fuel cell stack is in a temperature zone in which the temperature T is higher than or equal to the first temperature T1 and is lower than or equal to a second temperature T2 (which is higher than T1) to be smaller than the fuel gas supply amount F1.

3. The solid-oxide fuel-cell system according to claim 2, wherein, with respect to a fuel gas supply amount F2a which is set when the fuel cell stack temperature when the fuel supply to the fuel cell stack is stopped at the time of system stop before system start-up is lower than or equal to a predetermined temperature Tb, the fuel gas supply amount F2 is set to be a fuel gas supply amount F2b smaller than the fuel gas supply amount F2a when the fuel cell stack temperature exceeds the predetermined temperature Tb.

4. The solid-oxide fuel-cell system according to claim 1, wherein the start-up control unit stops the fuel gas supply to the fuel cell stack at a time point when a temperature T of the fuel cell stack reaches a third temperature T3 at which a reduction rate of the nickel metal is greater than or equal to a predetermined value, measures an elapsed time period from the time point when the temperature T reaches the third temperature T3, and restarts the stopped fuel gas supply to the fuel cell stack after the elapsed time period reaches a setting time period TM.

5. The solid-oxide fuel-cell system according to claim 1, wherein the start-up control unit reduces the fuel gas supply to the fuel cell stack at a time point when a temperature T of the fuel cell stack reaches a third temperature T3 at which a reduction rate of the nickel metal is greater than or equal to a predetermined value, measures an elapsed time period from the time point when the temperature T reaches the third temperature T3, and increases the reduced fuel gas supply amount to the fuel cell stack to be greater than or equal to the fuel gas supply amount before reducing after the elapsed time period reaches a setting time period TM.

6. The solid-oxide fuel-cell system according to claim 4, wherein, with respect to a setting time period TM1 set when the fuel cell stack temperature when the fuel supply to the fuel cell stack is stopped or reduced at the time of system stop before system start-up is lower than or equal to a predetermined temperature Tb, the setting time period TM is set to be a setting time period TM2 longer than the setting time period TM1 when the fuel cell stack temperature exceeds the predetermined temperature Tb.

7. The solid-oxide fuel-cell system according to claim 5, wherein, with respect to a setting time period TM1 set when the fuel cell stack temperature when the fuel supply to the fuel cell stack is stopped or reduced at the time of system stop before system start-up is lower than or equal to a predetermined temperature Tb, the setting time period TM is set to be a setting time TM2 longer than the setting time TM1 when the fuel cell stack temperature exceeds the predetermined temperature Tb.

8. The solid-oxide fuel-cell system according to claim 1, wherein, at a time point when a temperature T of the fuel cell stack reaches a fourth temperature T4 at which a reduction rate of the nickel metal is greater than or equal to a predetermined value, the control of the start-up control unit measures an elapsed time period from the time point, stops the fuel supply to the fuel cell stack at the time point when the temperature T of the fuel cell stack reaches a fifth temperature T5 set to be greater than the fourth temperature T4, restarts the fuel gas supply to the fuel cell stack at the time point when the temperature T of the fuel cell stack is decreased to the fourth temperature T4 after that, and continues the fuel gas supply to the fuel cell stack after the elapsed time period reaches a setting time period TM.

9. The solid-oxide fuel-cell system according to claim 1, wherein, at a time point when a temperature T of the fuel cell stack reaches a fourth temperature T4 at which a reduction rate of the nickel metal is equal to or greater than a predetermined value, the control of the start-up control unit measures an elapsed time period from the time point, reduces the fuel gas supply amount to the fuel cell stack at a time point when the temperature T of the fuel cell stack reaches a fifth temperature T5 set to be higher than the fourth temperature T4, increases the fuel gas supply amount to the fuel cell stack at a time point when the temperature T of the fuel cell stack is decreased to the fourth temperature T4 after that, and continues the fuel gas supply to the fuel cell stack after the elapsed time reaches a setting time period TM

10. The solid-oxide fuel-cell system according to claim 8, wherein, with respect to a setting time period TM1 set when the fuel cell stack temperature when the fuel supply to the fuel cell stack is stopped at the time of system stop before system start-up is lower than or equal to a predetermined temperature Tb , the setting time period TM is set to be a setting time period TM2 longer than the setting time TM1 when the fuel cell stack temperature exceeds the predetermined temperature Tb.

11. The solid-oxide fuel-cell system according to claim 9, wherein, with respect to a setting time period TM1 set when the fuel cell stack temperature when the fuel supply to the fuel cell stack is stopped at the time of system stop before system start-up is lower than or equal to a predetermined temperature Tb, the setting time period TM is set to be a setting time period TM2 longer than the setting time period TM1 when the fuel cell stack temperature exceeds the predetermined temperature Tb.

12. The solid-oxide fuel-cell system according to claim 1, further comprising a stop-time control unit that controls, at the time of normal stop of the system, the oxidation degree of nickel metal after the stop to be a predetermined value or less.

13. The solid-oxide fuel-cell system according to claim 12, wherein the oxidation degree of nickel metal is calculated based on a Ni oxidation degree defined by the following formula:

$$\text{Ni oxidation degree} = (\text{Number of moles of Ni atoms which are present as}$$

$$\text{NiO among Ni atoms contained in a cell main body}) / (\text{Number of moles of all Ni}$$

$$\text{atoms in the cell main body}) \times 100 \ (\%), \text{ and}$$

wherein the stop-time control unit controls the oxidation degree after the normal stop of the system to be a predetermined value or less.

14. A start-up control method of a solid-oxide fuel-cell system configured to include: a reformer which generates a hydrogen-enriched fuel gas by a reforming reaction; a fuel cell stack which includes a cell support made of a porous substance having a composition containing at least nickel metal, and allows the reaction of the fuel gas from the reformer with air to generate power; and a module case which surrounds the reformer and the fuel cell stack, in the inside of which excessive fuel gas of the fuel cell stack is combusted to increase temperatures of the reformer and the fuel cell stack so that the reformer and the fuel cell stack are maintained in a high temperature state,
the method comprising:

measuring a temperature of the fuel cell stack and controlling a fuel gas supply amount supplied from the reformer to the fuel cell stack at the same time; and
controlling a time period during which nickel metal oxidized in the cell support during increasing a temperature of the fuel cell stack at the time of system start-up, passes through a predetermined temperature zone in which the nickel metal is reduced by the fuel gas from the reformer to be equal to or longer than a time period set based on an oxidation degree of nickel metal before the system start-up.

# FIG. 1

# FIG. 2

# FIG. 3

CORRELATION BETWEEN Ni OXIDATION
DEGREE AND CELL VOLTAGE DROP RATE

○ OXIDATION DEGREE 0.8%
△ OXIDATION DEGREE 1.2%
□ OXIDATION DEGREE 2.8%
× OXIDATION DEGREE 3.3%
✻ OXIDATION DEGREE 10%

# FIG. 4

CORRELATION BETWEEN Ni OXIDATION DEGREE AND
VOLTAGE DROP RATE AFTER PERFORMING
START-AND-STOP OPERATION 240 TIMES

## FIG. 5

Plot: Y-axis "Ni OXIDATION DEGREE (%)" from 0 to 12; X-axis "MAXIMUM STACK TEMPERATURE AT TIME OF STOPPING REFORMED GAS (TEMPERATURE OF UPPER END OF CELL) (°C)" from 0 to 500.

# FIG. 6

```
            ┌─────────────────────┐
            │ POWER GENERATION    │
            │  STOP CONTROL       │
            └─────────────────────┘
                      │
                      ▼                        S101
        ┌─────────────────────────────────┐
   NO   │      IS THERE POWER             │
◄───────│  GENERATION STOP REQUEST?       │
        └─────────────────────────────────┘
                      │ YES
                      ▼                        S102
        ┌─────────────────────────────────┐
        │   IS IT NORMAL REQUEST OR       │   NO
        │    EMERGENCY REQUEST?           │────────────┐
        └─────────────────────────────────┘            │
                      │ YES                             │
                      ▼              S103               ▼                S108
        ┌──────────────────────────┐     ┌──────────────────────────────┐
        │  STOP CURRENT SWEEP      │     │  STOP CURRENT SWEEP          │
        │ REDUCE SUPPLY AMOUNT OF  │     │ (STOP FUEL/WATER SUPPLY)     │
        │     FUEL/WATER           │     └──────────────────────────────┘
        └──────────────────────────┘                   │
                      │                                 │
                      ▼              S104               │
        ┌──────────────────────────┐                   │
        │ READ MINIMUM OXIDATION   │                   │
        │   TEMPERATURE Ts         │                   │
        └──────────────────────────┘                   │
                      │                                 │
                      ▼              S105               │
        ┌──────────────────────────┐                   │
        │ READ STACK TEMPERATURE T │                   │
        └──────────────────────────┘                   │
                      │                                 │
                      ▼              S106               │
   NO   ┌──────────────────────────┐                   │
◄───────│        T ≤ Ts            │                   │
        └──────────────────────────┘                   │
                      │ YES                             │
                      ▼              S107               │
        ┌──────────────────────────┐                   │
        │ STOP REFORMED GAS SUPPLY │                   │
        │ (STOP FUEL/WATER SUPPLY) │                   │
        └──────────────────────────┘                   │
                      │                                 │
                      ▼◄────────────────────────────────┘
            ┌─────────────────────┐
            │        END          │
            └─────────────────────┘
```

$T \leq Ts$

22

## FIG. 7

# FIG. 8

START START-UP CONTROL
(STACK TEMPERATURE INCREASE PROCESS)

S1
SET FUEL GAS FLOW RATE AT F1

S2
IS STACK
TEMPERATURE T ≥ T1?  NO

YES

S3
IS STACK TEMPERATURE T WHEN
FUEL SUPPLY IS STOPPED AT PREVIOUS
SYSTEM STOP ≤ Tb?  NO

YES

S4
SET FUEL GAS FLOW
RATE AT F2a

S5
SET FUEL GAS FLOW
RATE AT F2b

S6
IS STACK
TEMPERATURE T > T2?  NO

YES

S7
SET FUEL GAS FLOW RATE AT F1

TO NEXT PROCESS
(POWER GENERATION)

24

# FIG. 9

FUEL GAS FLOW
RATE F = F1

FUEL GAS FLOW
RATE F = F2b
(AT START-UP AFTER
EMERGENCY S/D)

FUEL GAS FLOW
RATE F = F2a
(AT START-UP AFTER
NORMAL STOP)

FUEL GAS FLOW
RATE F = F1

FUEL GAS FLOW
RATE F = F1

TEMPERATURE T

T2

T1

TIME

# FIG. 10

SETTING TIME PERIOD TM1 AND VOLTAGE DROP RATE AFTER PERFORMING
NORMAL STOP 240 TIMES AND EMERGENCY S/D 20 TIMES

# FIG. 11

```
         START START-UP CONTROL
(STACK TEMPERATURE INCREASE PROCESS)
                    │
                    ▼                    S21
        SET FUEL GAS FLOW RATE AT F1
                    │
                    ▼◄─────────────────────────┐
                                         S22    │
               IS STACK                         │
         TEMPERATURE T≥T3?          NO ─────────┘
                    │ YES
                    ▼                    S23
          IS STACK TEMPERATURE T WHEN
      FUEL SUPPLY IS STOPPED AT PREVIOUS    NO ──────────┐
              SYSTEM STOP≤Tb?                             │
                    │ YES                                 │
                    ▼           S24                       ▼           S25
            TM0 ← TM1                              TM0 ← TM2
                    │                                     │
                    ▼◄────────────────────────────────────┘
                                         S26
        STOP (OR REDUCE) FUEL GAS SUPPLY
           START TIMER MEASUREMENT
                    │
                    ▼                              S27
  NO ──── IS TIMER TIME PERIOD TM>TM0?
                    │ YES
                    ▼                    S28
        SET FUEL GAS FLOW RATE AT F1
                    │
                    ▼
             TO NEXT PROCESS
            (POWER GENERATION)
```

FIG. 12

# FIG. 13

# FIG. 14

START START-UP CONTROL
(STACK TEMPERATURE INCREASE PROCESS)

**S31** SET FUEL GAS FLOW RATE AT F1

**S32** IS STACK TEMPERATURE T ≥ T4? → NO

YES

**S33** IS STACK TEMPERATURE T WHEN FUEL SUPPLY IS STOPPED AT PREVIOUS SYSTEM STOP ≤ Tb? → NO

YES

**S34** TM0 ← TM3

**S35** TM0 ← TM4

**S36** START TIMER MEASUREMENT

**S37** IS STACK TEMPERATURE T < T5? → NO → **S38** STOP (OR REDUCE) FUEL GAS SUPPLY

YES

**S39** IS STACK TEMPERATURE T > T4? → NO → **S40** SET FUEL GAS FLOW RATE AT F1

YES

**S41** IS TIMER TIME PERIOD TM > TM0? → NO

YES

**S42** SET FUEL GAS FLOW RATE AT F1

TO NEXT PROCESS (POWER GENERATION)

# FIG. 15

# FIG. 16

## INTERNATIONAL SEARCH REPORT

| International application No. |
|---|
| PCT/JP2012/078724 |

A. CLASSIFICATION OF SUBJECT MATTER
*H01M8/04*(2006.01)i, *H01M8/06*(2006.01)i, *H01M8/12*(2006.01)i, *H01M8/24*(2006.01)i

According to International Patent Classification (IPC) or to both national classification and IPC

B. FIELDS SEARCHED

Minimum documentation searched (classification system followed by classification symbols)
H01M8/04, H01M8/06, H01M8/12, H01M8/24

Documentation searched other than minimum documentation to the extent that such documents are included in the fields searched
Jitsuyo Shinan Koho          1922-1996     Jitsuyo Shinan Toroku Koho     1996-2013
Kokai Jitsuyo Shinan Koho    1971-2013     Toroku Jitsuyo Shinan Koho     1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2011-96432 A  (Kyocera Corp.),<br>12 May 2011 (12.05.2011),<br>paragraphs [0020] to [0028], [0072] to [0079];<br>fig. 1, 3, 4<br>(Family: none) | 1-14 |
| A | JP 2011-181490 A  (Topsoe Fuel Cell A/S),<br>15 September 2011 (15.09.2011),<br>paragraphs [0007], [0008], [0099] to [0105];<br>fig. 1, 3, 4<br>& US 2011/0146154 A1    & EP 2336083 A1<br>& CN 102104166 A        & KR 10-2011-0069727 A<br>& AU 2010253491 A        & RU 2010151606 A<br>& CA 2725699 A1 | 1-14 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>28 January, 2013 (28.01.13) | Date of mailing of the international search report<br>05 February, 2013 (05.02.13) |
|---|---|
| Name and mailing address of the ISA/<br>Japanese Patent Office | Authorized officer |
| Facsimile No. | Telephone No. |

Form PCT/ISA/210 (second sheet) (July 2009)

## INTERNATIONAL SEARCH REPORT

| International application No. |
| --- |
| PCT/JP2012/078724 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2004-335163 A (Mitsubishi Materials Corp., The Kansai Electric Power Co., Inc.), 25 November 2004 (25.11.2004), paragraphs [0024], [0031] to [0039]; fig. 1 (Family: none) | 1-14 |
| A | JP 11-162492 A (Tokyo Gas Co., Ltd.), 18 June 1999 (18.06.1999), paragraphs [0023] to [0031]; fig. 1 (Family: none) | 1-14 |
| A | JP 2008-311030 A (Nippon Oil Corp.), 25 December 2008 (25.12.2008), paragraphs [0002], [0007], [0039], [0040], [0069] to [0090] & US 2010/0173208 A1 & EP 2173000 A1 & WO 2008/153011 A1 & CA 2689674 A & CN 101682063 A & KR 10-2010-0034746 A & TW 200917560 A | 1-14 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 4565980 B